# EUROPÄISCHE PATENTSCHRIFT

(11) **EP 0 646 739 B1**
(45) Veröffentlichungstag und Bekanntmachung des Hinweises auf die Patenterteilung: **09.07.1997**
(21) Anmeldenummer: 94107038.5
(22) Anmeldetag: 05.05.1994
(51) Int. Cl.: F16J 15/32

(54) **Stangen- oder Kolbendichtung**
Sealing for rods or pistons
Joint d'étanchéité pour tiges ou pistons

(30) Priorität: 30.09.1993 DE 4333244
(43) Veröffentlichungstag der Anmeldung: 05.04.1995
(73) Patentinhaber: Firma Carl Freudenberg, D-69469 Weinheim (DE)
(72) Erfinder: von Arndt, Ernst-Moritz, Dr., D-69469 Weinheim (DE); Stein, Günter, Prof. Dr. rer. nat, D-69502 Hemsbach (DE)

(56) Entgegenhaltungen:
- EP-A- 0 207 703
- WO-A-90/02278
- DE-C- 4 124 531
- US-A- 2 997 318

## Beschreibung

Die Erfindung betrifft eine Stangen- oder Kolbendichtung mit einem Dichtungskörper aus polymerem Werkstoff, der die relativ verschiebbare und abzudichtende Fläche mit einer Dichtfläche berührt, die in Bewegungsrichtung von zumindest zwei sich in Umfangsrichtung erstreckenden Nuten unterbrochen ist, die einen Abstand voneinander haben, wobei der Abstand durch zumindest einen Steg gebildet ist, der sich in axialer Richtung zwischen den einander benachbarten Nuten erstreckt.

Eine derartige Dichtung ist beispielsweise aus der WO-A- 90/02278 bekannt. Der Dichtungskörper dieser Dichtung weist mehrere Nuten auf, welche durch Stege in axialer Richtung beabstandet sind.

Eine weitere Dichtung ist aus der EP 0 207 703 B1 bekannt. Die Dichtung umfaßt einen Dichtring, der in einer Ringnut eines Gehäuses angeordnet ist und zwei axial beabstandete Lippenabschnitte aufweist, wobei in radialer Richtung auf der der abzudichtenden Fläche abgewandten Seite des Dichtrings eine O-Ring-förmiges elastomeres Beaufschlagungsmittel vorgesehen ist, das den Dichtring dichtend an die abzudichtende Fläche anpreßt. Zwischen den Lippenabschnitten ist ein umlaufender Stegabschnitt vorgesehen, der sich nur bei größerer Druckbeaufschlagung an die abzudichtende Fläche anlegt. Der Dichtring kann aus Polytetrafluorethylen oder aus Polyurethan bestehen, wobei der Beaufschlagungsring bevorzugt aus Gummi besteht. Dabei ist allerdings zu beachten, daß die Größe der Reibkraft sehr stark von der Anpreßkraft auf den Dichtring und der Druckbeaufschlagung anhängig ist, was zu Funktionsbeeinträchtigungen der gegeneinander abzudichtenden Teile führen kann und daß der Beaufschlagungsring während einer langen Gebrauchsdauer Relaxationserscheinungen aufweist, die Undichtigkeiten der Dichtungsanordnung hervorrufen können.

Der Erfindung liegt die Aufgabe zugrunde, eine Stangen- oder Kolbendichtung der eingangs genannten Art derart weiterzuentwickeln, daß die obengenannten Nachteile vermieden werden, daß die Dichtung eine wesentlich verringertere Reibkraft aufweist und daß die geringe Reibkraft im wesentlichen unabhängig von Höhe der Druckbeaufschlagung überraschenderweise nahezu übereinstimmende Werte aufweist.

Diese Aufgabe wird erfindungsgemäß mit den kennzeichnenden Merkmalen von Anspruch 1 gelöst. Auf vorteilhafte Ausgestaltungen nehmen die Unteransprüche bezug.

Im Rahmen der vorliegenden Erfindung ist es vorgesehen, daß das Verhältnis A aus der Breite des Stegs und der Breite der Nuten in Bewegungsrichtung 1:2 bis 200:1 beträgt, daß das Verhältnis B aus der Breite und der Tiefe der Nuten 10:1 bis 1:5 beträgt und daß die Tiefe der Nuten einen Wert von 1 bis 200 µm aufweist. Durch eine derartige Ausgestaltung wird die Reibkraft bei einer translatorischen Bewegung der gegeneinander abzudichtenden Bauteile erheblich reduziert. Außerdem ist von hervorzuhebender Bedeutung, daß die Reibwerte, im wesentlichen unabhängig von der Druckbeaufschlagung der Dichtung nahezu übereinstimmend geringe Werte aufweist. In einem Druckbereich von 1 bar bis 350 bar relativen Überdrucks und übereinstimmendem, abzudichtendem Medium beträgt die mittlere Reibkraft, die über den gesamten Verschiebeweg der relativ verschiebbaren, abzudichtenden Fläche gemessen wurde, praktisch unabhängig vom Druck, 0,5 bis 1,5 daN, abhängig vom verwendeten polymeren Werkstoff des Dichtungskörpers. Demgegenüber beträgt die Reibkraft bei herkömmlichen Stangen- oder Kolbendichtungen, abhängig von der Druckbeaufschlagung, ungefähr 2 daN bei 5 bar relativem Überdruck und bereits 8 daN bei 80 bar. Anhand dieser Zahlenwerte ist zu erkennen, daß die Reibkraft herkömmlicher Dichtungen druckabhängig Werte aufweist, die in einem relativ kleinen Druckbereich bereits um Faktor 4 differieren und absolut gesehen vergleichsweise hoch sind.

Eine weitere Verringerung der Reibkraft sowie eine Verringerung der Streuung der Reibkräfte auf einen Wert von 1 daN ± 0,2 daN bei abzudichtenden Drücken von 1 bis 350 bar lassen sich erzielen, wenn das Verhältnis A 1,5:1 bis 30:1 und das Verhältnis B 2,1:1 bis 3,8:1 beträgt und wenn die Tiefe einen Wert von 7 bis 35 µm aufweist. Hinsichtlich eines weiter verbesserten Abdichtungsergebnisses hat es sich als vorteilhaft bewährt, wenn die Breite der Stege größer ist, als die Breite der angrenzenden Nuten. Bei einer Tiefe der Nuten von 7 bis 35 µm ist einerseits eine ausgezeichnete Dichtwirkung durch die vergleichsweise große Breite der Stege und die kapillaraktive Enge der Nuten zu erzielen. Andererseits reicht das in den Nuten eingeschlossene Schmiermedium aus, um bei der Bewegung der Dichtung die Dichtfläche gut zu schmieren, um dadurch abrasiven Verschleiß zu minimieren und übereinstimmend gute Gebrauchseigenschaften der Dichtung während einer langen Gebrauchsdauer sicherzustellen.

Die einander in axialer Richtung benachbarten Nuten können voneinander abweichende Querschnittsformen, -größen und/oder voneinander abweichende Abstände haben. Durch eine derartige Optimierung kann die Dichtung in präziser Weise den jeweiligen Gegebenheiten des Anwendungsfalles angepaßt werden. Um beispielsweise eine übereinstimmend gute Schmierung zwischen der relativ verschiebbaren, abzudichtenden Fläche und der Dichtfläche entlang der gesamten axialen Erstreckung des Dichtkörpers sicherzustellen, kann es vorgesehen sein, daß die Querschnittsgröße der dem abzudichtenden Medium am nächsten zugewandten Nut und die axiale Ausdehnung der Stege, die den Abstand zwischen den Nuten bilden, größer sind, als auf der dem abzudichtenden Medium abgewandten Seite der Dichtung. Eine solche Ausgestaltung bedingt, daß auch die Stege, die vom abzudichtenden Raum weiter entfernt sind, durch eine ausreichende Menge des abzudichtenden Mediums geschmiert werden und daß das zur Schmierung verwendete Medium sicher innerhalb des Dichtungskörpers gegen die Umgebung abgedichtet wird.

Nach einer bevorzugten Ausgestaltung sind die Nuten konzentrisch ausgebildet, wobei die Dichtfläche zumindest zehn Nuten umfaßt. Die konzentrische Lippenform kann in fertigungstechnischer und wirtschaftlicher Hinsicht einfach hergestellt werden, da die Werkzeugherstellung im Vergleich zur Herstellung eines Werkzeugs für spiralförmige Lippen wesentlich vereinfacht ist. Dennoch können zur Abdichtung des relativ hin- und herbeweglichen Bauteils Dichtungen zur Anwendung gelangen, deren Nuten zum Beispiel spiralförmig ineinanderübergehend ausgebildet sind.

Nach einer anderen vorteilhaften Ausgestaltung kann es vorgesehen sein, daß der Steg der Dichtfläche herstellungsbedingt mit der relativ verschiebbaren Fläche einen Winkel einschließt, der 1° bis 10°, bevorzugt 2 bis 5° beträgt und daß der Winkel in Richtung des abzudichtenden Raums geöffnet ist. Bei einer translatorischen Relativbewegung der beiden gegeneinander abzudichtenden Teile wird durch die Lage der Dichtfläche relativ zur abzudichtenden Fläche eine gute Schmierung der Stege der Dichtung mit dem abzudichtenden Medium bewirkt. Insbesondere im letztgenannten Bereich von 2° bis 5° wird sowohl ein guter Rückfördereffekt des abzudichtenden Mediums in Richtung des abzudichtenden Raums bedingt als auch eine ausgezeichnete statische Abdichtung durch den Kapillareffekt zwischen der abzudichtenden Fläche und der Dichtfläche bei relativ zueinander stillstehenden Teilen.

Die Nuten können auf der Dichtfläche eines Nutrings, einer Lippen- oder O-Ring-Dichtung angeordnet sein. Weitgehend unabhängig von der Bauform der relativ zueinander beweglichen Teile und der Platzverhältnisse zum Einbau der Dichtung kann diese zur Anwendung gelangen. Bevorzugt sind die Nuten jedoch auf der Dichtfläche von Nutringen oder Lippendichtungen angeordnet, da die Dichtfläche in diesen Fällen in axialer Richtung weitestgehend eben ausgebildet ist und die vorteilhaften Gebrauchseigenschaften der Dichtung dadurch am besten zum Tragen kommen.

Die Nuten können ein Profil haben, das abgerundet in den Steg der Dichtfläche übergeht. Hierbei ist von Vorteil, daß Verkantungserscheinungen und eine dadurch erhöhte Reibkraft zwischen den abzudichtenden Flächen auch dann vermieden werden, wenn die Oberflächen der abzudichtenden Bauteile nicht feinstbearbeitet sind, sondern übliche, fertigungsbedingte Rauhtiefen aufweisen. Hinsichtlich einer kostengünstigen Fertigung der abzudichtenden Teile ist eine derartige Ausgestaltung von besonderer Bedeutung. Außerdem wird durch eine derartige Ausgestaltung des Dichtkörpers die Gefahr seiner Beschädigung der Dichtung während der Montage auf ein Minimum reduziert.

Die Nuten können ein im wesentlichen trapezförmiges Profil aufweisen, wobei die axialen Begrenzungsflächen des trapezförmigen Profils mit der abzudichtenden Fläche einen Winkel von 20° bis 85°, bevorzugt von bis 50° bis 70° einschließen. Hierbei ist von Vorteil, daß die Querschnittsform und Querschnittsgröße der Nuten während einer langen Gebrauchsdauer weitgehend unverändert erhalten bleiben. Würde der Winkel beispielsweise nur etwa 10° bis 20° betragen, würden sich bereits bei minimalem abrasiven Verschleiß eine entscheidende Verkleinerung der Nut, eine entscheidende Vergrößerung der Breite der Stege und eine unerwünschte Erhöhung der Reibkraft ergeben. Würde der Winkel demgegenüber 85° bis 90° betragen, wäre der Abstreifeffekt zwischen der Dichtfläche und der abzudichtenden Fläche zu groß, wodurch zwischen den Stegen und der abzudichtenden Fläche die Reibkraft in unerwünschter Weise erhöht würde. Der Übergang von den Begrenzungsflächen des trapezförmigen Profils in den Nutgrund ist bei einer derartigen Ausführungsform besonders einfach abzurunden. Durch den abgerundeten Übergang wird die Kerbempfindlichkeit an dieser Stelle, ebenso wie die Einreißgefahr, auf ein Minimum reduziert, was hinsichtlich eines geringeren Verschleißes und einer längeren Gebrauchsdauer mit gleichbleibend guten Gebrauchseigenschaften von Vorteil ist.

Die Nuten können durch Einwirkung auf die Dichtfläche des Dichtkörpers mit Hilfe eines Laserstrahls erzeugt sein. Hierbei ist von Vorteil, daß besonders exakte geometrische Abmessungen der Nuten verwirklicht werden können. Die Nuten werden durch den Laserstrahl in die Oberfläche der Dichtfläche eingebrannt. Die Eindringtiefe kann durch die Energiedichte des Laserstrahls, seine Pulszahl und die Wiederholrate gesteuert werden.

Die erfindungsgemäße Stangen- oder Kolbendichtung kann als Bremsmanschette eines Bremszylinders in einem hydraulische Bremssystem eines Kraftfahrzeugs verwendet werden. Speziell für diese Anwendung sind die vorteilhaften Gebrauchseigenschaften bezüglich minimaler, weitgehend druckunabhängiger Reibungswerte von besonderem Vorteil. Im Vergleich zu herkömmlichen Bremsmanschetten beträgt die Reibkraft der beanspruchten Dichtung bei einer Verwendung als Bremsmanschette höchsten 1/5 der bisherigen Reibkraft.

Die erfindungsgemäße Stangen- oder Kolbendichtung wird nachfolgend anhand der als Anlage beigefügten Zeichnungen weiter verdeutlicht. Es zeigen:
Fig. 1 ein Ausführungsbeispiel der Stangen- oder Kolbendichtung in geschnittener Darstellung,
Fig. 2 einen Ausschnitt eines ersten Ausführungsbeispiels aus der Dichtfläche einer Stangen- oder Kolbendichtung gemäß Fig. 1,
Fig. 3 einen Ausschnitt eines zweiten Ausführungsbeispiels aus der Dichtfläche einer Stangen- oder Kolbendichtung gemäß Fig. 1 und
Fig. 4 ein Beispiel eines Verfahrens zur Einbringung der Nuten in die Dichtfläche.

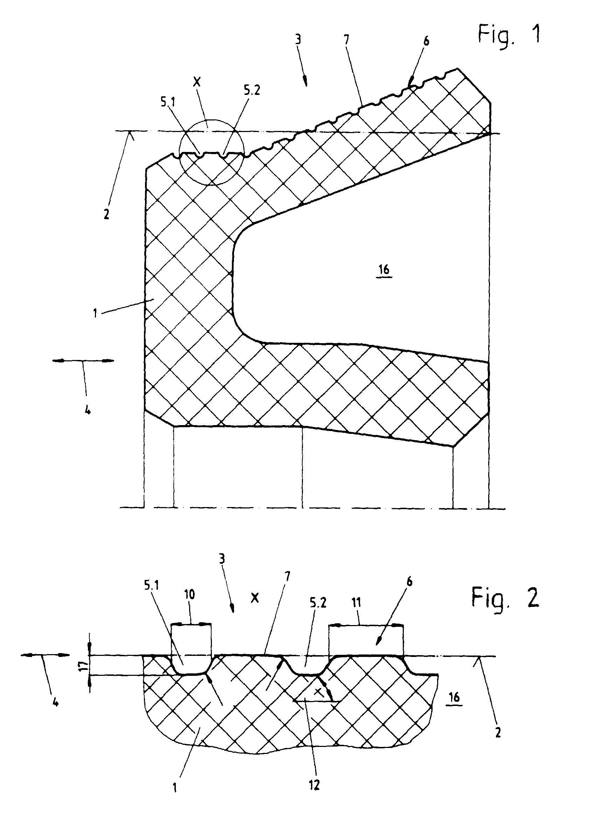

In Fig. 1 ist ein Ausführungsbeispiel einer Stangen- oder Kolbendichtung gezeigt, die als Bremsmanschette eines Hauptbremszylinders im hydraulischen Bremssystem eines Kraftfahrzeugs zur Anwendung gelangt. Der Dichtungskörper 1 besteht in diesem Ausführungsbeispiel aus einem Ethylen-Propylen-Elastomer und dichtet Drücke bis 350 bar zuverlässig ab. Der Dichtungskörper 1 ist im nicht montierten, herstellungsbedingten Zustand gezeigt, wobei die relativ verschiebbare und abzudichtende Fläche 2 mit einer strichpunktierten Linie schematisch angedeutet ist. Die Dichtfläche 3 des Dichtungskörpers 1 weist mehrere sich in Umfangsrichtung erstreckende und konzentrisch umlaufende Nuten 5.1, 5.2, ... auf, die im Abstand 6 voneinander angeordnet und durch Stege 7 voneinander getrennt sind. In dem hier dargestellten Ausführungsbeispiel liegt das Verhältnis A aus der Breite 11 des Stegs 7 und der Breite 10 der Nuten 5.1, 5.2, ... in Bewegungsrichtung 4 zwischen 1,5:1 und 30:1, wobei das Verhältnis B aus der Breite 10 und der Tiefe 17 der Nuten 2,1:1 bis 3,8:1 beträgt und die Tiefe 17 innerhalb eines Bereichs von 7 bis 35 µm liegt. Während der bestimmungsgemäßen Verwendung, also im eingebauten Zustand des Dichtungskörpers 1, sind die Nuten 5.1, 5.2, ... einander in einer funktionstechnischen Reihenschaltung zugeordnet. Durch die Vielzahl der Nuten 5.1, 5.2, ... und ihre Anordnung entlang der gesamten axialen Erstreckung des Dichtungskörpers 1 auf der der abzudichtenden Fläche 2 zugewandten Seite, sind ausgezeichnete Abdichtungsergebnisse während einer langen Gebrauchsdauer unter Beibehaltung der günstigen Reibeigenschaften zu erzielen.

In Fig. 2 ist ein Ausschnitt aus einem ersten Ausführungsbeispiel gemäß des Dichtungskörpers 1 aus Fig. 1 gezeigt. Die einander benachbarten Nuten 5.1, 5.2 weisen in diesem Ausführungsbeispiel in Bewegungsrichtung 4 jeweils eine Breite 10 von 45 µm und eine Tiefe C von 17 µm auf, wobei die Breite 11 des Stegs 7 in diesem Ausführungsbeispiel 90 µm beträgt. Der Nutgrund der Nuten 5.1, 5.2 ist ebenso, wie der Übergang zu den Stegen 7 der Dichtfläche 3 gerundet ausgebildet, wobei die Nuten 5.1, 5.2 trapezförmig gestaltet sind. Die axialen Begrenzungsflächen des trapezförmigen Profils der Nuten 5.1, 5.2 schließen mit der abzudichtenden Fläche 2 einen Winkel 12 von 60° ein. In diesem Ausführungsbeispiel berühren die Stege 7 die abzudichtende Fläche 2 flächig anliegend.

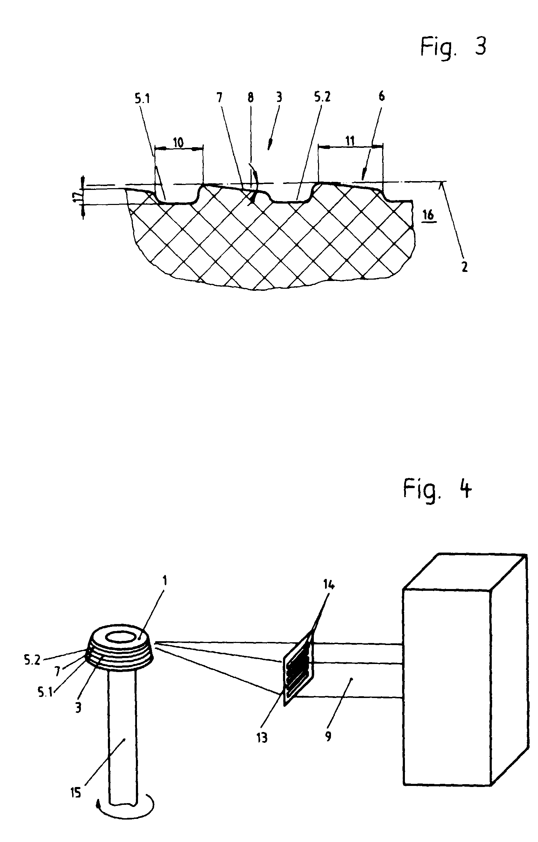

In Fig. 3 ist ein Ausschnitt aus einem zweiten Ausführungsbeispiel der erfindungsgemäßen Stangen- oder Kolbendichtung gezeigt, ähnlich dem Ausführungsbeispiel aus Fig. 2. Die Stege 7 der Dichtfläche 3 schließen herstellungsbedingt mit der relativ verschiebbaren Dichtfläche 2 einen Winkel 8 ein, der in diesem Ausführungsbeispiel 5° beträgt. Der abzudichtende Raum ist in diesem Ausführungsbeispiel mit dem Bezugszeichen 16 markiert. Der Steg 7 ist als Auflaufschräge für das abzudichtende Medium gestaltet, so daß bei einer Relativverschiebung der abzudichtenden Fläche in Richtung des abzudichtenden Raums 16 Flüssigkeitsbestandteile des abzudichtenden Mediums durch eine Schleppkraft zwischen die abzudichtende Fläche 2 und die Stege 7 der Dichtfläche 3 gefördert werden. Die Nuten 5.1, 5.2 weisen in diesem Ausführungsbeispiel eine Tiefe 17 von 10 µm und eine Breite 10 von 35 µm auf, während die Breite 11 der Stege 7 120 µm beträgt.

In Fig. 4 ist eine Anordnung zur Herstellung des erfindungsgemäßen Dichtungskörpers 1 gezeigt, der als Bremsmanschette ausgebildet ist. Mit Hilfe eines energiereichen Excimer-Lasers wird in Umfangsrichtung des Dichtungskörpers eine sehr feine Rillierung in dessen Oberfläche eingebrannt. Der Laserstrahl wird nach seinem Durchgang durch eine Lochmaske 13, die in diesem Beispiel fünf rechteckige Schlitze 14 umfaßt, über eine entsprechende Optik auf der Oberfläche der Dichtfläche 13 abgebildet. Durch Drehen des auf einen Dorn 15 aufgesteckten Dichtungskörpers 1 wird eine Rillierung in Umfangsrichtung eingebrannt. Die Nuttiefe 17 kann dabei über die Energiedichte des Laserstrahls 9, seine Pulszahl und die Wiederholrate der Einwirkung auf den Dichtungskörper 1 gesteuert werden.

## Patentansprüche

1. Stangen- oder Kolbendichtung mit einem Dichtungskörper (1) aus polymerem Werkstoff, der die relativ verschiebbare und abzudichtende Fläche (2) mit einer Dichtfläche (3) berührt, die in Bewegungsrichtung von zumindest zwei sich in Umfangsrichtung erstreckenden Nuten (5.1, 5.2, ...) unterbrochen ist, die einen Abstand (6) voneinander haben, wobei der Abstand (6) durch zumindest einen Steg (7) gebildet ist, der sich in axialer Richtung zwischen den einander benachbarten Nuten (5.1, 5.2, ...) erstreckt, dadurch gekennzeichnet, daß das Verhältnis A aus der Breite (11) des Stegs (7) und der Breite (10) der Nuten (5.1, 5.2, ...) in Bewegungsrichtung (4) 1:2 bis 200:1 beträgt, daß das Verhältnis B aus der Breite (10) und der Tiefe (17) der Nuten (5.1, 5.2, ...) 10:1 bis 1:5 beträgt und daß die Tiefe (17) der Nuten (5.1, 5.2, ...) einen Wert von 1-200 µm aufweist.

2. Stangen- oder Kolbendichtung nach Anspruch 1, dadurch gekennzeichnet, daß das Verhältnis A 1,5:1 bis 30:1 beträgt, daß das Verhältnis B 2,1:1 bis 3,8:1 beträgt und daß die Tiefe (17) einen Wert von 7 bis 35 µm aufweist.

3. Stangen- oder Kolbendichtung nach Anspruch 1 bis 2, dadurch gekennzeichnet, daß die einander in axialer Richtung benachbarten Nuten (5.1, 5.2, ...) voneinander abweichende Querschnittsformen, -größen und/oder voneinander abweichende Abstände (6) haben.

4. Stangen- oder Kolbendichtung nach Anspruch 1 bis 3, dadurch gekennzeichnet, daß die Nuten (5.1, 5.2 ...) konzentrisch ausgebildet sind und daß die Dichtfläche (3) zumindest zehn Nuten (5.1, 5.2, ...) umfaßt.

5. Stangen- oder Kolbendichtung nach Anspruch 1 bis 4, dadurch gekennzeichnet, daß der Steg (7) der Dichtfläche (3) herstellungsbedingt mit der relativ verschiebbaren Fläche (2) einen Winkel (8) einschließt, der 1° bis 10°, bevorzugt 2° bis 5° beträgt und daß der Winkel (8) in Richtung des abzudichtenden Raums (16) geöffnet ist.

6. Stangen- oder Kolbendichtung nach Anspruch 1 bis 5, dadurch gekennzeichnet, daß die Nuten (5.1, 5.2, ...) auf der Dichtfläche (3) eines Nutrings, einer Lippen- oder O-Ring-Dichtung angeordnet sind.

7. Stangen- oder Kolbendichtung nach Anspruch 1 bis 6, dadurch gekennzeichnet, daß die Nuten (5.1, 5.2, ...) ein Profil haben, das abgerundet in den Steg (7) der Dichtfläche (3) übergeht.

8. Stangen- oder Kolbendichtung nach Anspruch 1 bis 7, dadurch gekennzeichnet, daß die Nuten (5.1, 5.2, ...) ein im wesentlichen trapezförmiges Profil aufweisen.

9. Stangen- oder Kolbendichtung nach Anspruch 8, dadurch gekennzeichnet, daß die axialen Begrenzungsflächen des trapezförmigen Profils mit der abzudichtenden Fläche (2) einen Winkel (12) von 20° bis 85°, bevorzugt von 50° bis 70° einschließen.

10. Stangen- oder Kolbendichtung nach Anspruch 1 bis 9, dadurch gekennzeichnet, daß die Nuten (5.1, 5.2, ...) durch Einwirkung auf die Dichtungfläche (3) des Dichtungskörpers (1) mit Hilfe eines Laserstrahls (9) erzeugt sind.

11. Verwendung der Stangen- oder Kolbendichtung nach Anspruch 1 bis 10 als Bremsmanschette eines Bremszylinders in einem hydraulischen Bremssystem.

## Claims

1. A rod or piston seal having a seal body (1) made of a polymer material which touches with a sealing surface (3) the relatively displaceable surface (2) to be sealed off, the sealing surface (3) being interrupted in the direction of movement by at least two grooves (5.1, 5.2, ...) extending in the circumferential direction and having a spacing (6) from one another, the said spacing (6) being formed by at least one web (7) which extends in the axial direction between the grooves (5.1, 5.2, ...) adjacent to one another, characterized in that the ratio A of the width (11) of the web (7) and the width (10) of the grooves (5.1, 5.2, ...) is 1:2 to 200:1 in the direction of movement (4), in that the ratio B of the width (10) and the depth (17) of the grooves ( 5.1, 5.2, ...) is 10:1 to 1:5, and in that the depth (17) of the grooves (5.1, 5.2, ...) has a value of 1 to 200 µm.

2. A rod or piston seal according to claim 1, characterized in that the ratio A is 1.5:1 to 30:1, in that the ratio B is 2.1:1 to 3.8:1, and in that the depth (17) has a value of 7 to 35 µm.

3. A rod or piston seal according to either of claims 1 and 2, characterized in that the grooves (5.1, 5.2, ...) adjacent to one another in the axial direction have differing cross-sectional shapes and sizes and/or differing spacings (6) from one another.

4. A rod or piston seal according to any of claims 1 to 3, characterized in that the grooves (5.1, 5.2, ...) are formed concentrically, and in that the sealing surface (3) includes at least ten grooves (5.1, 5.2, ...).

5. A rod or piston seal according to any of claims 1 to 4, characterized in that, owing to the manufacturing process, the web (7) of the sealing surface (3) encloses an angle (8) with the relatively displaceable surface (2), which angle is from 1° to 10°, preferably from 2° to 5°, and 'in that the angle (8) is open in the direction of the space (16) to be sealed off.

6. A rod or piston seal according to any of claims 1 to 5, characterized in that the grooves (5.1, 5.2, ...) are arranged on the sealing surface (3) of a groove ring, a lip seal or an O-ring seal.

7. A rod or piston seal according to any of claims 1 to 6, characterized in that the grooves (5.1, 5.2, ...) have a profile which merges in a rounded manner into the web (7) of the sealing surface (3).

8. A rod or piston seal according to any of claims 1 to 7, characterized in that the grooves (5.1, 5.2, ...) have a substantially trapezoidal profile.

9. A rod or piston seal according to claim 8, characterized in that the axial boundary surfaces of the trapezoidal profile enclose an angle (12) of from 20° to 85°, preferably from 50° to 70°, with the surface (2) to be sealed off.

10. A rod or piston seal according to any of claims 1 to 9, characterized in that the grooves (5.1, 5.2, ...) are produced by acting on the sealing surface (3) of the sealing body (1) with the aid of a laser beam (9).

11. The use of the rod or piston seal according to any of claims 1 to 10 as a brake sleeve of a brake cylinder in a hydraulic brake system.

## Revendications

1. Joint d'étanchéité pour tiges ou pistons, comprenant un corps d'étanchéité (1) fait d'une matière polymère qui est en contact avec la surface (2) à rendre étanche susceptible de subir un déplacement relatif par une surface d'étanchéité (3) qui est interrompue, dans la direction du mouvement, par au moins deux rainures (5.1, 5.2) s'étendant dans la direction circonférentielle situées à une distance (6) l'une de l'autre, la distance (6) étant formée par au moins une partie intermédiaire (7) qui s'étend, en direction axiale, entre les rainures (5.1, 5.2, ...) contiguës les unes aux autres, caractérisé en ce que le rapport A de la largeur (11) de la partie intermédiaire (7) et de la largeur (10) des rainures (5.1, 5.2, ...), dans la direction du mouvement (4), va de 1:2 à 200:1, en ce que le rapport B de la largeur (10) et de la profondeur (17) des rainures (5.1, 5.2, ...) va de 10:1 à 1:5 et en ce que la profondeur (17) des rainures (5.1, 5.2, ...) prend une valeur de 1-200 µm.

2. Joint d'étanchéité pour tiges ou pistons selon la revendication 1, caractérisé en ce que le rapport A va de 1,5:1 à 30:1, en ce que le rapport B va de 2,1:1 à 3,8:1 et en ce que la profondeur (17) prend une valeur allant de 7 à 35 µm.

3. Joint d'étanchéité pour tiges ou pistons selon l'une des revendications 1 à 2, caractérisé en ce que les rainures (5.1, 5.2, ...) contiguës les unes aux autres dans la direction axiale ont des formes et des grandeurs de section transversale différentes les unes des autres et/ou des distances (6) différentes les unes par rapport aux autres.

4. Joint d'étanchéité pour tiges ou pistons selon l'une des revendications 1 à 3, caractérisé en ce que les rainures (5.1, 5.2, ...), sont exécutées de manière concentrique et en ce que la surface d'étanchéité (3) comprend au moins dix rainures (5.1, 5.2,...).

5. Joint d'étanchéité pour tiges ou pistons selon l'une des revendications 1 à 4, caractérisé en ce que la partie intermédiaire (7) de la surface d'étanchéité (3), pour des raisons de fabrication, forme avec la surface (2) susceptible de subir un déplacement relatif un angle (8) mesurant de 1° à 10°, de préférence de 2° à 5°, et en ce que l'angle (8) est ouvert en direction de l'espace (16) à rendre étanche.

6. Joint d'étanchéité pour tiges ou pistons selon l'une des revendications 1 à 5, caractérisé en ce que les rainures (5.1, 5.2, ...) sont situées sur la surface d'étanchéité (3) d'une bague à rainures, d'une bague à lèvres ou d'un joint torique d'étanchéité.

7. Joint d'étanchéité pour tiges ou pistons selon l'une des revendications 1 à 6, caractérisé en ce que les rainures (5.1, 5.2, ...) ont un profil qui se fond de manière arrondie dans la partie intermédiaire (7) de la surface d'étanchéité (3).

8. Joint d'étanchéité pour tiges ou pistons selon l'une des revendications 1 à 7, caractérisé en ce que les rainures (5.1, 5.2, ...) ont un profil de forme essentiellement trapézoïdale.

9. Joint d'étanchéité pour tiges ou pistons selon la revendication 8, caractérisé en ce que les surfaces de délimitation axiale du profil trapézoïdal forment avec la surface (2) à rendre étanche un angle (12) mesurant de 20° à 85°, de préférence de 50° à 70°.

10. Joint d'étanchéité pour tiges ou pistons selon l'une des revendications 1 à 9, caractérisé en ce que les rainures (5.1, 5.2, ...) sont produites au moyen d'un rayon laser (9) par action sur la surface d'étanchéité (3) du corps d'étanchéité (1).

11. Utilisation du joint d'étanchéité pour tiges ou pistons selon l'une des revendications 1 à 10 en tant que manchette de frein d'un cylindre de frein dans un système de freinage hydraulique.
